# EUROPEAN PATENT APPLICATION

(11) **EP 4 597 325 A1**
(43) Date of publication of application: **06.08.2025**
(21) Application number: 24155466.6
(22) Date of filing: 02.02.2024
(51) Int. Cl.: G06F 11/34, G06F 17/40, G06N 20/00, G06F 11/07, G06F 11/30

(54) **METHOD AND PROCESSING SYSTEM FOR PROCESSING A LOG FILE OF AT LEAST ONE APPARATUS**

(71) Applicant: Carl Zeiss AG, 73447 Oberkochen (DE)
(72) Inventor: Nentwich, Corbinian, 81379 München (DE); Buerge, Erik, 73447 Oberkochen (DE)
(74) Representative: Meier, Florian

(57) **Abstract**

To process a log file of at least one apparatus (14), a processing system (20) obtains the log file. The processing system (20) identifies one or several multi-line log messages in the log file. The processing system (20) detects timestamps in several log messages of the log file, comprising communicatively interfacing with a data-driven processing model (12) to obtain timestamp-related information. The processing system (20) extracts timeseries data based at least on the timestamp-related information and performs at least one operation based on the timeseries data.

## Description

### TECHNICAL FIELD

Embodiments of the invention relate to processing methods and processing systems operative to process a log file of at least one apparatus, the at least one apparatus comprising a plurality of apparatus components, the plurality of apparatus components comprising a source of electromagnetic radiation and/or a detector of electromagnetic radiation. Embodiments of the invention relate in particular to processing methods and processing systems operative to extract timeseries data from the log file of such an apparatus and to perform one or several control operations based on the timeseries data. Embodiments of the invention relate in particular to processing methods and processing systems operative to extract timeseries data from the log file of at least one optical, ophthalmic, medical, and/or industrial apparatus that comprises a source of electromagnetic radiation and/or a detector of electromagnetic radiation.

### BACKGROUND

Optical apparatuses with several components can have varying levels of complexity, depending on their intended purpose and design. These apparatuses comprise a combination of optical components (lenses, mirrors, filters, some of which may be controllable), light sources, detectors, control and/or evaluation logics, and/or other specialized components. The need to control these components in a reliable manner to achieve accurate and reliable optical performance adds to the complexity in operating such apparatuses. Malfunction or issues in one of the apparatus components can have the potential to adversely affect the reliability of the results obtained by the apparatus. Examples for such apparatuses include apparatuses operative to perform measurements using electromagnetic radiation (such as optical microscopes, medical imaging apparatuses, and/or industrial measurement apparatuses) and/or to effect physical modifications of a biological, medical, or industrial element (such as medical instrument apparatuses operative to act on tissue, manipulation apparatuses for biological specimens, or industrial manufacturing apparatuses).

To facilitate the monitoring of correct apparatus operation and the detection of possible issues, such an apparatus may be operative to generate and provide a log file. To provide log files that include log messages generated by the different apparatus components, such optical apparatuses may have built-in software and hardware features for logging and recording information. These features of the apparatus can monitor and capture various parameters, events, and errors occurring within the apparatus during operation. The log files can then be used for troubleshooting, diagnostics, and performance analysis.

For illustration, a microscope may comprise components such as objective lenses, a light source, and mechanical stages. It can have a software interface that generates log files containing information about the magnification, focus position, brightness settings, and any detected issues like motor malfunctions or calibration errors. For further illustration, an ophthalmic apparatus such as a retinal camera or OCT (optical coherence tomography) scanner, can generate log files with information related to specific test settings and any abnormalities or errors during image acquisition or analysis. For still further illustration, a manufacturing and/or quality control apparatus may comprise optical inspection systems operative for use in various industries. The log files may include details about the production process, measurements, defect detection, and any out-of-specification results.

The detection of potential issues based on log files can be a considerable challenge. The complexity of analyzing log files is exacerbated by the fact that, in a complex apparatus having many apparatus components that generate log messages for inclusion in the log file, the size of the log file can be considerable.

US 11 615 075 B2 addresses the problem of log file parsing. The detection of timeseries is based on templates. Thus, the user has to define a priori which strings appear before a timestamp, for example. During exploratory analysis of log files, this knowledge about patterns is not given.

Thus, there is still a need in the art for enhanced techniques of processing log files.

### SUMMARY

It is an object of the invention to provide enhanced techniques of processing log files. It is in particular an object of the invention to provide techniques of processing log files that do not require a priori input specifying string patterns that indicate a timestamp to extract timeseries information. It is an optional object of the invention to provide processing methods and processing systems operative to process a log file without requiring prior input specifying string patterns, even when the log file includes log messages that are distributed over several lines of the log file. It is also an optional object of the invention to provide such processing methods and processing systems that are capable to trigger an action responsive to the extracted timeseries.

According to an aspect of the invention, a method of processing a log file of at least one apparatus is provided. The at least one apparatus comprises a plurality of apparatus components. The plurality of apparatus components comprising a source of electromagnetic radiation and/or a detector of electromagnetic radiation. The method comprises obtaining, by at least one processing system, the log file, the log file comprising a plurality of lines; identifying, by the at least one processing system, several log messages contained in the log file, comprising identifying one or several multi-line log messages distributed over more than one line of the plurality of lines, the several log messages being indicative events recorded by at least one of the plurality of apparatus components; detecting, by the at least one processing system, timestamps in the several log messages, comprising communicatively interfacing with a data-driven processing model to obtain timestamp-related information that comprises data specifying a timestamp format; extracting, by the at least one processing system, timeseries data from the several log messages based at least on the timestamp-related information; and performing, by the at least one processing system, at least one operation based on the timeseries data.

Various effects and advantages are attained by the processing method. By communicatively interfacing with a data-driven processing model to obtain timestamp-related information that comprises data specifying a timestamp format, the at least one processing system can detect and extract timestamps without requiring prior user input specifying the timestamp format and/or the timestamp regular expression (regex) pattern. This enhances the versatility of the processing system and reduces the dependency on human operator knowledge of timestamp formats for the various apparatus components. With the at least one processing system being operative to identify multi-line log messages distributed over several lines, the timeseries data extraction can operate more reliably on log files that include such multi-line log messages. This enhances the versatility of the processing system and renders it particularly suitable for use with an apparatus comprising a plurality of apparatus components operative to generate log messages, which apparatus components include a source of and/or detector for electromagnetic radiation (such as light in the visible and/or infrared spectral range).

The data-driven processing model may comprise an artificial intelligence (Al) model, such as a machine learning (ML) model.

Thereby, an AI model may be accessed and used to determine, based on a sub-set of the log messages, the timestamp-related information. The at least one processing system is operative to then use the timestamp-related information to parse the log file to extract the timeseries data. This allows the at least one processing system to extract the timeseries data using the AI model, without requiring prior user input specifying the timestamp format.

The data-driven processing model may comprise a large language model (LLM).

Thereby, the at least one processing system is operative to query and use the LLM to determine, based on a sub-set of the log messages, the timestamp-related information. The at least one processing system is operative to then use the timestamp-related information to parse the log file to extract the timeseries data. This allows the at least one processing system to extract the timeseries data without requiring prior user input specifying the timestamp format, using communicative interaction with the LLM to obtain the required information on the format and/or regular expression (regex) pattern of time information (e.g., timestamps) in the log file.

The timestamp-related information may comprise the data specifying the timestamp format and data specifying a string pattern for the timestamp format.

Thereby, the at least one processing system is operative to use the timestamp format and/or the string pattern for the timestamp format to identify timestamps when parsing the identified several log messages of the log file.

Communicatively interfacing with the data-driven processing model to obtain the timestamp-related information may comprise obtaining, by the at least one processing system, the data specifying the timestamp format, comprising generating a query to the data-driven processing model (e.g., the LLM) to obtain the data specifying the timestamp format, the query being generated based on a sub-set of the several log messages.

Thereby, the at least one processing system is operative to query and use the LLM to determine, based on a sub-set of the log messages, the timestamp-related information. This obviates the need for prior user input specifying the timestamp format.

Generating the query based on the sub-set of the several log messages may comprise generating, by the at least one processing system, a natural language query including at least portions of the sub-set of the log messages, and providing, by the at least one processing system, the natural language query to the LLM to obtain information on the timestamp format in response thereto.

Thereby, the at least one processing system is operative to query and use the LLM to determine, based on a sub-set of the log messages, the timestamp-related information, while ensuring explainability of the processing of the log file (e.g., by allowing an operator to review the query that was formulated by the at least one processing system).

Generating the query based on the sub-set of the several log messages may comprise removing or obfuscating portions of the sub-set of the several log messages that can include sensitive information.

Thereby, the extraction of timestamps is made possible without requiring prior user input of the timestamp format while eliminating the risk of potentially sensitive information being included in the query to the data-driven processing model. This safeguards privacy even when the data-driven processing model is not operated under the control of the operator of the at least one apparatus.

Removing or obfuscating portions of the sub-set of the several log messages in the query may comprise removing or obfuscating portions related to an identity of a subject (such as a patient's name or birthdate), a medical condition (such as a diagnosis), characteristics of the apparatus or its apparatus components (such as identifiers for the apparatus components used in the apparatus), an identity of an object inspected or manufactured by the apparatus (such as product of manufacture that is inspected by or manufactured using the at least one apparatus), and/or characteristics of an object inspected manufactured by the apparatus (such as a product of manufacture that is inspected by or manufactured using the at least one apparatus).

Thereby, the extraction of timestamps is made possible without requiring prior user input of the timestamp format while eliminating the risk of potentially sensitive information being included in the query to the data-driven processing model. This safeguards privacy even when the data-driven processing model is not operated under the control of the operator of the at least one apparatus.

Communicatively interfacing with the data-driven processing model to obtain the timestamp-related information may comprise: obtaining, by the at least one processing system, the data specifying the string pattern to detect a timestamp location in the several log messages (e.g., in the message string of the several message), comprising generating a further query to the data-driven processing model (e.g., the LLM) to obtain the data specifying the string pattern for the timestamp format, the further query being generated based on the timestamp format.

Thereby, the extraction of timestamps is made possible using the string pattern and without requiring prior user-based specification of the string pattern.

Generating the further query based on the timestamp format may comprise generating, by the at least one processing system, a further natural language query including at least a request to provide regex pattern(s) for the timestamp format, and providing, by the at least one processing system, the further natural language query to the LLM to obtain information on the regex pattern(s) in response thereto.

Thereby, the at least one processing system is operative to query and use the LLM to determine, based on a sub-set of the log messages, the timestamp-related information, while ensuring explainability of the processing of the log file (e.g., by allowing an operator to review the query that was formulated by the at least one processing system).

Extracting the timeseries data from the several log messages may comprise extracting, for each of the several log messages, a timestamp, wherein the at least one processing system extracts the timestamp based on the string pattern.

Thereby, the extraction of timestamps is made possible using the string pattern and without requiring prior specification of the string pattern by a user. Required information on the string pattern is obtained by querying the data-driven processing model (e.g., the LLM).

The string pattern may comprise a regular expression (regex) pattern. Extracting the timeseries data from the several log messages may comprise extracting, for each of the several log messages, a timestamp, wherein the at least one processing system extracts the timestamp based on the regex pattern.

Thereby, the extraction of timestamps is made possible using the regex pattern and without requiring prior specification of the regex pattern by a user. Required information on the regex pattern is obtained by querying the data-driven processing model (e.g., the LLM).

Identifying the one or several multi-line log messages may comprise determining rates of occurrence of different line start patterns in the log file, and identifying lines in the log file having a line start pattern for which a rate of occurrence in the log file is less than a maximum of the rates of occurrence.

Thereby, the processing system can identify lines other than a first line of a multi-line log message in an objective, data-driven manner, based on statistics of occurrence rates of different line start patterns. This makes it possible to identify and correctly treat multi-line log messages for extracting timeseries data, based on the line start patterns and without requiring a priori information on the start pattern(s) of log messages.

Identifying the several log messages may comprise wrapping each of the one or several multi-line log messages.

Thereby, wrapping can be performed that includes combining a line having a start pattern with an occurrence rate less than the maximum of the rates of occurrence with a preceding line of the log file. This reduces the risk of potential inaccuracies due to multi-line log messages in the log file when parsing the several log messages to extract the timeseries data.

Extracting the timeseries data from the several log messages may comprise parsing a union of all single-line log messages and all wrapped multi-line log messages to extract, for each of these several log messages, at least a label, a value, and a time for the respective log message.

Thereby, the several log messages can be parsed in a systematic manner, using information on the timestamp that is obtained by communicatively interfacing with an AI model (e.g., an LLM) and using a mechanism for identifying multi-line messages that is based on line start pattern statistics determined from the log file. Thus, the at least one processing system is operative to parse the log file without requiring prior input specifying the timestamp format, the regex pattern of timestamps, and/or the format of multi-line log messages. This enhances the versatility of the processing method in that it can be applied to complex optical apparatuses having a plurality of components that can have their own mechanisms of logging issues during operation of the optical apparatus.

Extracting the timeseries data from the several log messages may comprise extracting, for at least some of the several log messages, a label. Extracting the timeseries data may comprise extracting, for each label extracted from the several log messages, tuples that respectively include a value for the label and time data that is based on the timestamp.

Thereby, the processing system can provide timeseries data that, for each label, may respectively have one or several tuples, each specifying (i) the time data that is equal to or otherwise indicative of the timestamp of the timestamp of the respective log message and (ii) the value for the label in the respective log message.

The labels may be selected from a group consisting of any one or any combination of: type of check performed (such as actuator check, calibration of an optical component, storage system check, etc.) (in which case the value may be an indicator of a result of the check performed); usage of the various apparatus components (such as a usage time or number of usages or consumed / free capacity recorded in a message) (in which case the value may be an indicator of a usage amount); fault cases during operation (such as a blocked actuator, unacceptable light source drift, storage write and/or fault errors, etc.).

Thereby, the timeseries data extracted from the log file may include, for each of different possible labels (which may be predetermined or established based on the log file), pairs of value and time data, facilitating a systematic (e.g., fully automated) analysis of the log file.

Extracting the time series data may comprise flagging, in each of the several log messages, data (e.g., digits) that are unlikely to form part of the timeseries.

Thereby, the timeseries data can be extracted efficiently and with a focus on portions of the several log messages that includes data relevant for extracting the timestamps, the labels and their associated values.

The control operation may comprise a control operation that mitigates an apparatus condition detected based on the timeseries data, which is a possible root cause for a degradation in measurement results obtained using the apparatus and/or a degradation in the quality of modifications of an object (e.g., a medical, biological, or industrial) performed using the apparatus.

Thereby, the processing method can perform a method of mitigating adverse effects resulting from an apparatus condition, as indicated by the extracted timeseries data.

The at least one control operation may comprise generating control data based on the timeseries data and outputting the control data to affect operation of the at least one apparatus. The control data may comprise control data that mitigate a problem detected based on the timeseries data. Alternatively or additionally, the control data may comprise control data that cause the at least one apparatus to stop operating and/or that restrict functions of the at least one apparatus until the problem detected based on the timeseries data has been fixed.

Thereby, the at least one processing system can trigger an appropriate action in response to an issue (such as a degradation of an apparatus component of the plurality of apparatus components).

Alternatively or additionally, the at least one control operation may comprise generating and outputting storage control data to cause storage of the timeseries data.

Thereby, the at least one processing system can trigger storing of the timeseries data for further use. The method may comprise using the timeseries data by, e.g., a control unit to control operation of the at least one apparatus.

Alternatively or additionally, the at least one control operation may comprise controlling a human machine interface (HMI). The at least one processing circuit may be operative to cause an alarm, warning, and/or other status information relating to the at least one apparatus to be output via the HMI, wherein the alarm, warning, and/or other status information relating to the at least one apparatus is dependent on the timeseries data.

Thereby, the at least one processing system can perform apparatus monitoring functions, which assist in operating the at least one apparatus.

The processing method may comprise processing a plurality of additional log files, each associated with a different one of the at least one apparatus, using the processing techniques disclosed herein. The log file and the plurality of additional log files may originate from apparatuses that may have different hardware configurations. The log file and the plurality of additional log files may comprise timestamps of different formats and/or with different regex patterns to be written when logging events. The processing techniques disclosed herein, and in particular the processing steps discussed herein, can be used to identify several log messages and parse the several log messages for each of the various log files, even when the log files have different timestamp formats and/or different regex patterns.

Thereby, the processing method can be applied in versatile manner for analyzing log files from a plurality of apparatuses, without requiring prior input specifying the timestamp format and/or regex pattern.

The at least one apparatus may comprise one or several of: a microscope; a medical apparatus; a medical imaging apparatus; an ophthalmic apparatus; a manufacturing apparatus; an industrial measurement apparatus; a quality control apparatus; an image acquisition apparatus; a planetarium apparatus; a spectroscopic apparatus.

Thereby, the extraction of timeseries data from a log file without requiring prior input specifying the timestamp format, regex pattern, and/or multi-line message format can be performed for such apparatuses. The method is particularly useful in association with such apparatuses which include components for controllably generating, controllably manipulating, and/or detecting electromagnetic radiation (such as light in the visible and/or infrared and/or ultraviolet spectral range) and which further include electric components for performing control, input interface control, evaluation and/or recording functions. In such cases, it is particularly likely that the various apparatus components can result in log files that have timestamp format and/or regex patterns that may be difficult to ascertain and/or that enhance the risk of human-induced error if specified by a user.

According to a further aspect of the invention, there is provided a method of operating an apparatus, the apparatus comprising a plurality of apparatus components, the plurality of apparatus components comprising a source of electromagnetic radiation and/or a detector of electromagnetic radiation. The method of operating the apparatus comprises performing the processing method according to an aspect or embodiment to process a log file of the apparatus, the log file comprising log messages generated by the plurality of apparatus components. The method of operating the apparatus further comprises controlling, by the at least one processing system or a control system communicatively interfaced with the at least one processing system, the apparatus based at least on the timeseries data extracted from the log file.

The method of operating the apparatus provides the effect that an appropriate control action can be initiated automatically or semi-automatically, based on the extracted timeseries data obtained by the processing method.

Controlling the apparatus may comprise controlling the apparatus mitigate a problem detected based on the timeseries data. Alternatively or additionally, controlling the apparatus may comprise stopping operation and/or restricting functions of the apparatus until the problem detected based on the timeseries data has been fixed.

Thereby, the at least one processing system can trigger an appropriate action in response to an issue (such as a degradation of an apparatus component of the plurality of apparatus components).

According to a further aspect of the invention, there is provided a method of monitoring an apparatus, the apparatus comprising a plurality of apparatus components, the plurality of apparatus components comprising a source of electromagnetic radiation and/or a detector of electromagnetic radiation. The method of monitoring the apparatus comprises performing the processing method according to an aspect or embodiment to process a log file of the apparatus, the log file comprising log messages generated by the plurality of apparatus components. The method of monitoring the apparatus further comprises controlling, by the at least one processing system or a control system communicatively interfaced with the at least one processing system, at least one HMI based at least on the timeseries data extracted from the log file.

Thereby, the at least one processing system can perform apparatus monitoring functions, which assist in operating the at least one apparatus.

Controlling the at least one human machine interface may comprise causing an alarm, warning, and/or other status information relating to the at least one apparatus to be output via the HMI, wherein the alarm, warning, and/or other status information relating to the at least one apparatus is dependent on the timeseries data.

Thereby, the at least one processing system can perform apparatus monitoring functions and cause output to be generated based on the timeseries data, to notify an operator and/or maintenance staff of possible issues.

According to a further aspect of the invention, there is provided a processing system for processing a log file of at least one apparatus. The processing system comprises at least one processing circuit operative to: obtain the log file, the log file of the at least one apparatus, the at least one apparatus comprising a plurality of apparatus components, the plurality of apparatus components comprising a source of electromagnetic radiation and/or a detector of electromagnetic radiation; identify several log messages contained in the log file, the at least one processing circuit being operative to identify one or several multi-line log messages distributed over more than one line of the plurality of lines, the several log messages being indicative events recorded by at least one of the plurality of apparatus components; detect timestamps in the several log messages, the at least one processing circuit being operative communicatively interface with a data-driven processing model to obtain timestamp-related information that comprises data specifying a timestamp format; and extract timeseries data from the several log messages based at least on the timestamp-related information. The processing system is operative to perform at least one operation based on the timeseries data.

Various effects and advantages are attained by the processing method. By being operative for communicatively interfacing with a data-driven processing model to obtain timestamp-related information that comprises data specifying a timestamp format, the processing system can detect and extract timestamps without requiring prior input specifying the timestamp format and/or the timestamp regular expression (regex) pattern. This enhances the versatility of the processing system and reduces the dependency on human operator knowledge of timestamp formats for the various apparatus components. With the processing system being operative to identify multi-line log messages distributed over several lines, the timeseries data extraction can operate more reliably on log files that include such multi-line log messages. This enhances the versatility of the processing system and renders it particularly suitable for use with an apparatus comprising a plurality of apparatus components operative to generate log messages, which apparatus components include a source of and/or detector for electromagnetic radiation (such as light in the visible and/or infrared spectral range).

The processing system may further comprise at least one interface operative to obtain the log file from a storage system. The at least one interface may be operative to obtain the log file via a communication system that may comprise a wide area network and/or cellular communication system, without being limited thereto.

Thereby, the log file may be obtained from a storage system external to the processing system.

Additional optional features of the processing system and the effects attained thereby correspond to the features discussed in association with the method. The at least one processing circuit may be operative to perform the various processing operations disclosed in association with the method according to an aspect or embodiment.

The processing system may be operative to perform the method according to any aspect or embodiment disclosed herein. The at least one processing circuit may be operative to perform the various processing operations disclosed in association with the method according to an aspect or embodiment.

According to a further aspect, there is disclosed a control system for an apparatus, the apparatus comprising a plurality of apparatus components, the plurality of apparatus components comprising a source of electromagnetic radiation and/or a detector of electromagnetic radiation. The control system comprises the processing system according to an aspect or embodiment to process a log file of the apparatus, the log file comprising log messages generated by the plurality of apparatus components. The control system is operative to control the apparatus based at least on the timeseries data extracted from the log file.

The control system provides the effect that an appropriate control action can be initiated automatically or semi-automatically, based on the extracted timeseries data obtained by the processing system.

The control system may be operative to control the apparatus to mitigate a problem detected based on the timeseries data. Alternatively or additionally, the control system may be operative to control the apparatus to stop operation and/or restrict functions of the apparatus until the problem detected based on the timeseries data has been fixed.

Thereby, the control system can trigger an appropriate action in response to an issue (such as a degradation of an apparatus component of the plurality of apparatus components).

According to a further aspect of the invention, there is provided a monitoring system for an apparatus, the apparatus comprising a plurality of apparatus components, the plurality of apparatus components comprising a source of electromagnetic radiation and/or a detector of electromagnetic radiation. The monitoring system comprises the processing system according to an aspect or embodiment to process a log file of the apparatus, the log file comprising log messages generated by the plurality of apparatus components. The monitoring system is operative to control at least one HMI based at least on the timeseries data extracted from the log file.

Thereby, the processing system can be used to perform apparatus monitoring functions, which assist in operating the apparatus.

The processing system, the control system, and the monitoring system may respectively be operative to process log files from a plurality of apparatuses having different hardware configurations, resulting in different timestamp formats and/or regex patterns and/or multi-line message formats, without using prior input of the timestamp formats and/or regex patterns and/or multi-line message formats.

Thereby, the processing system, the control system, and the monitoring system can operate in a versatile manner in association with apparatuses having different hardware configurations, optionally also in association with apparatuses being of different apparatus types.

According to a further aspect of the invention, there is provided a system. The system comprises at least one apparatus comprising a plurality of apparatus components, the plurality of apparatus components comprising a source of electromagnetic radiation and/or a detector of electromagnetic radiation, the at least one apparatus being operative to generate a log file. The system comprises a data-driven processing model operative to provide timestamp-related information that comprises data specifying a timestamp format. The system comprises the processing system, the control system, or the monitoring system according to an aspect or embodiment, wherein the processing system is operative to communicatively interface with the data-driven processing model to process the log file of the at least one apparatus
The system provides the effect that control operations that are dependent on an analysis of the log file can be determined by automatically parsing the log file to extract the timeseries data, without requiring prior input specifying the timestamp format and/or regex pattern, and/or of multi-line message formats. Thus, reliability of performing control operations is enhanced, as the risk of human-induced error is mitigated.

The at least one apparatus may comprise one or several of: a microscope; a medical apparatus; a medical imaging apparatus; an ophthalmic apparatus; a manufacturing apparatus; an industrial measurement apparatus; a quality control apparatus; an image acquisition apparatus; a planetarium apparatus; a spectroscopic apparatus.

Thereby, the extraction of timeseries data from a log file without requiring prior input specifying the timestamp format, regex pattern, and/or multi-line message format can be performed for such apparatuses. The processing system is particularly useful in association with such apparatuses which include components for controllably generating, controllably manipulating, and/or detecting electromagnetic radiation (such as light in the visible and/or infrared and/or ultraviolet spectral range) and which further include electric components for performing control, input interface control, evaluation and/or recording functions. In such cases, it is particularly likely that the various apparatus components can result in log files that have timestamp format and/or regex patterns that may be difficult to know and/or that, if a user specified them, would enhance the risk of human-induced error.

According to another aspect of the invention, there is provided an AI model having an input operative to receive a query comprising portions of a log file of an apparatus and having an output operative to provide, responsive to the query, information on a timestamp format of the log file. The input may be operative to receive a further query including at least a reference to a timestamp format, with the AI model being operative to provide, at the output and responsive to the further query, information on a regex pattern for the timestamp format. The AI model may be an LLM.

Thereby, an AI model is used to determine the timestamp format and/or regex pattern for a log file.

According to another aspect of the invention, there is provided a use of an AI model (in particular of an LLM) to determine the timestamp format and/or regex pattern for a log file of an apparatus for performing apparatus control and/or maintenance operations.

Thereby, an AI model is used to determine the timestamp format and/or regex pattern for a log file.

According to another aspect of the invention, there is provided machine-readable instruction code comprising machine-readable instructions which, when executed by at least one processing circuit, cause the at least one processing circuit to perform the method according to an aspect or embodiment of the invention.

The effects attained by the machine-readable instruction code correspond to the effects disclosed in association with the methods and systems according to various embodiments.

According to another aspect of the invention, there is provided a non-transitory storage medium having stored thereon machine-readable instruction code comprising machine-readable instructions which, when executed by at least one processing circuit, cause the at least one processing circuit to perform the method according to an aspect or embodiment of the invention.

The effects attained by the non-transitory storage medium correspond to the effects disclosed in association with the methods and systems according to various embodiments.

The processing method, processing system, system, and machine-readable instruction code may be used in association with optical apparatuses for performing measurements using electromagnetic radiation in the visible, infrared, and/or ultraviolet spectral range. The processing method, processing system, system, and machine-readable instruction code may be used in association with optical apparatuses for modifying an object (such as a biological, physiological, or industrial object) using electromagnetic radiation in the visible, infrared, and/or ultraviolet spectral range. The processing method, processing system, system, and machine-readable instruction code may be used in association with other apparatuses operative to interact with matter (e.g., for measurements and/or modifying the matter), without being limited thereto.

### BRIEF DESCRIPTION OF THE DRAWINGS

Embodiments of the invention will be described with reference to the drawings in which similar or identical reference signs designate elements with similar or identical configuration and/or function.
Figure 1 is a schematic representation of a processing system.
Figure 2 is a schematic representation of a system comprising the processing system.
Figure 3 is a schematic representation of at least one processing circuit of the processing system.
Figure 4 is a flow chart of a method.
Figure 5 is a flow chart of a process.
Figure 6 is a flow chart of a process.
Figure 7 shows an illustrative portion of a log file.
Figure 8 shows rate of occurrence statistics for line start patterns.
Figure 9 is a flow chart of a process.
Figure 10 is a flow chart of a process.
Figure 11 is a signaling diagram.
Figure 12 shows an illustrative portion of a log file.
Figure 13 is a flow chart of a process.
Figure 14 is a flow chart of a process.
Figure 15 shows an illustrative portion of a log file.
Figure 16 shows an illustrative portion of a log file.
Figure 17 is a schematic representation of a system comprising the processing system.
Figure 18 is a schematic representation of a system comprising the processing system.
Figure 19 is a schematic representation of a system comprising the processing system.
Figure 20 is a schematic representation of a system comprising the processing system.
Figure 21 is a flow chart of a method.

### DETAILED DESCRIPTION OF EMBODIMENTS

Embodiments of the invention will be described with reference to the drawings. In the drawings, similar or identical reference signs designate elements with similar or identical configuration and/or function.

While embodiments will be described in association with exemplary optical apparatuses, such as apparatuses comprising a source of and/or detector for radiation in the visible, infrared, and/or ultraviolet spectral range, the techniques disclosed herein are not limited to such optical apparatuses.

The features of embodiments may be combined with each other unless specifically stated otherwise.

Embodiments of the invention generally relate to processing methods and processing systems operative to extract timeseries data from a log file of an apparatus. The processing method and the processing system may be operative to identify and wrap multi-line messages in a data-driven manner, based on an occurrence rates of different line start patterns in the log file. The processing method and the processing system are operative to extract timestamps from the log file, without requiring a priori input defining the timestamp format and/or a regex pattern (e.g., a timestamp regex pattern). The processing method and the processing system are operative to communicatively interface with a data-driven processing model to obtain, based on a sub-set of several log messages identified in the log file, information on the timestamp format and/or the regex pattern. The processing method and the processing system are operative to use the obtained information on the timestamp format and/or the regex pattern for extracting the timeseries data and, more particularly, timestamps.

The processing method and processing system are operative to perform at least one action based on the extracted timeseries data. For illustration, in some implementations, the processing method and processing system are operative to perform a control action that causes a modification of apparatus operation of the apparatus (e.g., to prevent the apparatus from operating in a manner that does not guarantee results in accordance with the apparatus specifications, responsive to detecting an issue based on the timeseries data). For further illustration, the processing method and processing system may alternatively or additionally be operative to use the timeseries data extracted from the log file for controlling an HMI or a storage system.

As used herein, a "log file" is a file having a plurality of lines (each of which may terminate with data indicating a line break), which includes a plurality of log messages. The log messages comprise messages from several apparatus components of the apparatus with which the log file is associated. The log messages comprise single-line messages and multi-line messages, which are identified in the processing disclosed herein.

As used herein, the term "log message" is used synonymously to "log entry" or "log file entry."

As used herein, an "apparatus comprising at least a source of and/or a detector for electromagnetic radiation" may be an optical apparatus that includes a source for electromagnetic radiation in the visible, infrared, and/or ultraviolet spectral range and/or that include a detector for electromagnetic radiation in the visible, infrared, and/or ultraviolet spectral range. Examples for such apparatuses include an optical microscope apparatus, a medical imaging or surgery apparatus that uses interaction of optical signals with physiological materials to perform imaging or surgery, a spectroscopy apparatus, or other apparatuses. The apparatus components may be accommodated in a same apparatus housing, but this is not a requirement. In particular, the term "apparatus" as used herein encompasses apparatuses that comprise several devices that interact to perform a function; the several devices may include several housing of apparatus components.

As used herein, the term "data-driven processing model" comprises an artificial intelligence (Al) model, such as a machine learning (ML) model. The data-driven processing model may in particular comprise or be an LLM.

As used herein, the term "LLM" refers to an Al-based system that is operative to interpret natural language queries (e.g., human language queries) and provide a response to such queries. The LLM may comprise a neural network or other AI model (such as transformer model) with millions, or even billions, of parameters, allowing it to exhibit advanced capabilities in natural language understanding, generation, translation, and other language-related tasks. The LLM may be trained on data from the internet and other sources in order to capture diverse patterns, context, and nuances of language. The processing system and processing method disclosed herein are operative to interact with and use the LLM to obtain information on a timestamp format and/or regex pattern. It will be appreciated that LLMs and interfaces to query LLMs exist and are harnessed by the processing system and processing method disclosed herein.

As used herein, a "timestamp format" in a log file is a way to represent and identify the time and date when a certain event or entry occurred in the log. It is typically used to track and record activity, errors, or changes in a system or application. The timestamp format consists of specific components that define how the time and date information is structured. The timestamp format may also define a string that precedes the numerical values representing the time and date information. This string is known as a prefix and is typically used to provide additional context or information about the log message. The prefix string can vary depending on the specific log format or apparatus being used. It can include any text or characters that are deemed relevant for the log entry.

As used herein, a "regular expression" or "regex" pattern for a timestamp in a log file refers to data specifying how time and date information in a timestamp is structured. The regex pattern may include information on the sequence and/or number of digits of various elements of the date and time information (such as day, month, year, hour, minute, second) and/or additional symbols (such as symbols that can separate the different elements of the date and time information; "." and "-" are common examples).

As used herein, a "string pattern" refers to a specific sequence or arrangement of characters that is used to match and extract certain information from the log entries. An example of a string pattern is a timestamp prefix in association with the regex pattern of a timestamp.

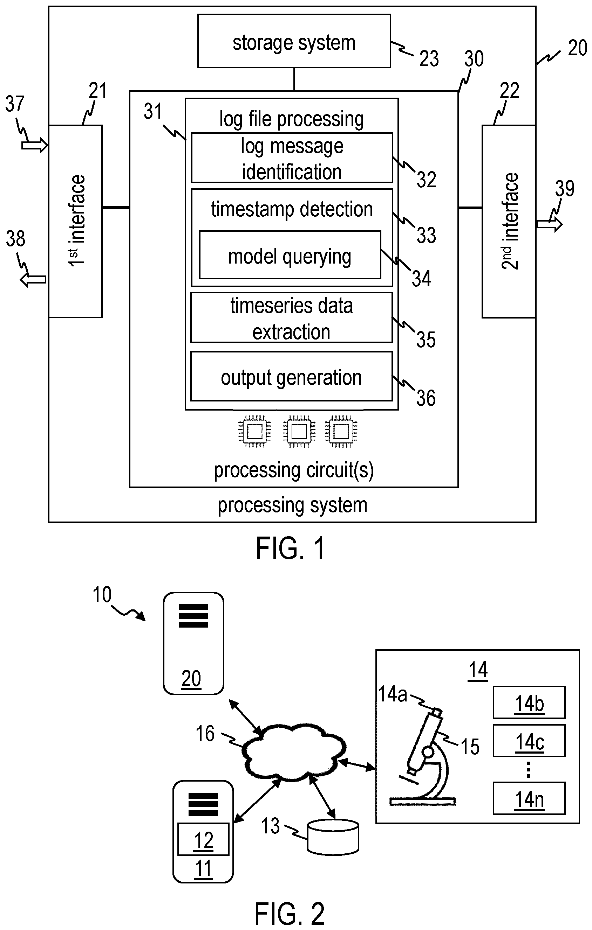

Figure 1 shows a schematic block diagram of a processing system 20 for processing a log file of an apparatus, with the log file having a plurality of lines and containing log messages from several apparatus components of the apparatus.

The processing system 20 comprises a storage system 23 and at least one processing circuit 30. The processing system 20 comprises at least one interface 21 operative to obtain a log file 37 of the apparatus, which log file 37 has a plurality of lines and containing log messages from several apparatus components of the apparatus. The processing system 20 may be operative to store the log file and/or timeseries data extracted from the log file in the storage system 23. The processing system 20 is operative to perform a log file processing 31 to extract the timeseries data and perform at least one action based on the extracted timeseries data.

Generally, the at least one processing circuit 30 is operative to extract timestamps from the log file 37 and/or perform wrapping of multi-line log messages (thereby reducing the risk that the second etc. line of a multi-line log message will be incorrectly treated as a new log message when parsing the log messages), without requiring a user input to specify timestamp format(s), regex pattern(s), and/or multi-line log message format(s). The at least one processing circuit 30 is operative to extract the timeseries data in a data-driven manner. The at least one processing circuit 30 is operative to distinguish first lines of multi-line messages from subsequent lines of the multi-line messages, using a data-driven approach that determines statistics of rates of occurrence of different line start patterns. The at least one processing circuit 30 is operative to extract timestamps by communicatively interfacing, via at least one interface (such as interface 21), with a data-driven processing model (such as an LLM) to obtain the timestamp format and/or the regex pattern.

The at least one processing circuit 30 is operative to generate, based on the extracted timeseries data, output. The at least one processing circuit 30 may be operative such that the output may comprise control commands 38 that cause operation of the apparatus (to which the log file relates) to be altered and/or that cause an internal storage system 23 or a storage system external to the processing system 20 to store the timeseries data. The at least one processing circuit 30 may be operative such that the output comprises output 39 that causes an alert, warning, or other status information of the apparatus as indicated by the extracted timeseries data to be output via an HMI. The at least one processing circuit 30 may be operative to provide the output via the interface 21 and/or at least one further interface 22 of the processing system 20.

The at least one processing circuit 30 is operative to perform the log file processing 31, comprising a log message identification 32 to identify several log messages in the log file. The several log messages typically comprise log messages from several different apparatus components of the apparatus. The several log messages comprise single line log messages and multi-line log messages, with the log message identification 32 being operative to detect the multi-line log messages and wrap the multi-line log messages (e.g., by concatenating the content of a line that is not a first line of the multi-line log message to the previous line of the log file).

The at least one processing circuit 30 is operative such that the log file processing 31 comprises a timestamp detection 33. The several log messages identified by the log message identification 32 may have timestamp formats and/or regex patterns that may be different from one log file to another. While timestamps formats and/or regex patterns usually stay the same within a same log file, the several log messages identified by the log message identification 32 may, in some cases, have timestamp formats and/or regex patterns that can vary within the log file. The processing circuit 30 is operative extract timeseries data also in the latter case.

To detect timestamps without requiring user input specifying the timestamp format and/or regex pattern, the log message identification 32 is operative to obtain the timestamp format and/or regex pattern by performing a model querying 34 to query a data-driven processing model (e.g., an LLM). The timestamp identification 32 may be operative to perform a multi-step process to obtain the timestamp format and the regex pattern, with a query being generated to obtain the timestamp format and a further query being generated to obtain the regex pattern.

The at least one processing circuit 30 is operative such that the log file processing 31 comprises a timeseries data extraction 35. The timeseries data extraction may comprise a log message parsing, including extracting timestamps, labels, and values from the several log messages. The values may respectively be associated with a label. The timeseries data extraction may comprise storing, for any label (such as an apparatus parameter or apparatus component parameter), a value and time data, with the time data being equal to or generated from the timestamp of the log message that includes the combination of label and value. Thereby, the timeseries data is generated in a manner that is particularly suitable for identification of fault scenarios, apparatus degradation, or other issues related to the apparatus, allowing the processing system 30 to automatically trigger a corrective or mitigating action and/or to indicate the fault scenario, apparatus degradation, or other issue to an operator.

The at least one processing circuit 30 is operative such that the log file processing 31 comprises an output generation 36. The output generation 36 is operative such that the output is dependent on the timeseries data extracted from the log file. The output generation 36 may be operative to generate output comprising control data based on the timeseries data and to output the control data to affect operation of the at least one apparatus. The at least one processing circuit 30 may be operative such that the control data comprises control data that mitigate a problem detected based on the timeseries data. Alternatively or additionally, the at least one processing circuit 30 may be operative such that the control data comprises control data that cause the at least one apparatus to stop operating and/or that restrict functions of the at least one apparatus until the problem detected based on the timeseries data has been fixed. Alternatively or additionally, the at least one processing circuit 30 may be operative such that the output causes storing of the timeseries data for further use. Alternatively or additionally, the at least one processing circuit 30 may be operative such that the output comprises control data to control an HMI to cause an alarm, warning, and/or other status information relating to the at least one apparatus to be output via the HMI, wherein the alarm, warning, and/or other status information relating to the at least one apparatus is dependent on the timeseries data.

The at least one processing circuit 30 may be operative to store the log file and/or the timeseries data locally in the storage system 23 of the processing system or remotely therefrom, e.g., for further use in controlling the apparatus from which the log file originates.

The at least one processing circuit 30 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto, to perform the processing of the image data 61. The at least one processing circuit 30 may be operative to execute instruction code that may be stored in the storage system 23 to perform the log file processing 31.

Figure 2 is a schematic representation of a system 10.

The system 10 comprises at least one apparatus. The at least one apparatus may comprise an optical apparatus 14 or several optical apparatuses 14. The optical apparatus 14 may comprise an optical system 15 (such as a microscope or another arrangement of optical components). The optical apparatus 14 may comprise a plurality of other apparatus components 14a, 14b, 14c, 14n, which include, e.g., a light source 14b and/or an optical detector (such as a CCD, CMOS, or TDI camera chips 14a). The apparatus 14 is operative to generate a log file including log messages indicative of events related to several of the apparatus components 14a, 14b, 14c, 14n. Some or several of the apparatus components 14a, 14b, 14c, 14n may be operative to write log messages into the log file, and/or a central control unit of the apparatus 14 may aggregate the log messages form the apparatus components for writing into the log file.

The system 10 comprises a data repository 13 (e.g., a log file storage system that may be implemented as a cloud-based storage system) to store the log file. The log file may comprise log messages relating to several different apparatus components 14a, 14b, 14c, 14n of the apparatus 14. The several log messages comprise single line log messages and multi-line log messages. The several log messages may have timestamp formats and/or regex patterns that may be different from the log file of other apparatuses and/or within the log file. The data repository 13 does not need to be separate from the apparatus 14 but may also be integrated into the apparatus 14. During apparatus operation, the apparatus 14 may be operative to store the log file in the data repository 13.

The system 10 comprises a LLM 12. The LLM 12 may be executed locally in the processing system 20 or in a further processing system 11 operative so as to enable the log file processing 31 of the processing system 30 to communicatively interface with the LLM 12. The LLM 12 may be an LLM that is trained using, inter alia, training data comprising log file strings contained in various log files, including information on the timestamp format and/or regex pattern for the various log files. The LLM 12 may be an LLM trained using training data comprising several hundred or several thousands of log files, including log files of apparatuses comprising sources and/or detectors for electromagnetic radiation. The training may be implemented splitting the training data into a training set (e.g., 70% of the training data), a validation set (e.g., 15% of the training data), and a test set (e.g., 15% of the training data).

The LLM 12 does not need to be a dedicated LLM trained solely for the purpose of providing information on timestamp format and/or regex pattern, but may be a conventionally, publicly available LLM that is trained with data that includes at least information on a timestamp formats and/or regex patterns.

The system 10 comprises a communication system 16. The communication system 16 may comprise a wide area network (WAN), a local area network (LAN), and/or a cellular network.

During operation, the processing system 20 is operative to retrieve the log file from the data repository 13 and extract the timeseries data by performing the log file processing 31. To perform the log file processing 31, the processing system 20 communicatively interfaces with the LLM 12 to obtain information on the timestamp format and/or regex pattern of log messages in the log file retrieved from the data repository 13.

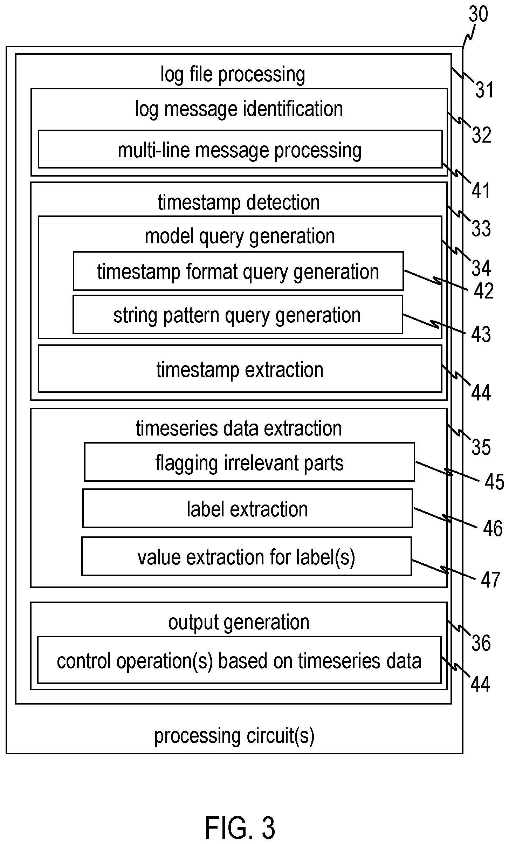

Figure 3 is a schematic representation of the at least one processing circuit 30. As already explained, the at least one processing circuit 30 is operative to perform the log file processing 31 which includes a log message identification 32, a timestamp detection 33, a timeseries data extraction 35, and an output generation 36.

The log message identification 32 comprises a multi-line message processing 41. The multi-line message processing 41 may comprise identifying, based on statistics of line start patterns of the log file, which lines of the log file are lines of a multi-line message other than the first line of the multi-line message. The multi-line message processing 41 may comprise wrapping any multi-line message (e.g., by concatenating any line identified to be a line of a multi-line message other than the first line with the preceding line in the log file). Thereby, the risk of incorrectly treating the second, third, etc. line of a multi-line message in the timeseries data extraction is mitigated.

The timestamp detection 33 comprises a query generation 34 for querying the data-driven model (e.g., the LLM 12) to obtain the timestamp format and/or regex pattern. The at least one processing circuit 30 may be operative to perform a query generation 42 to communicatively interface with the data-driven model (e.g., the LLM 12) to obtain the timestamp format. The at least one processing circuit 30 may be operative such that the query generation 42 generates a query that includes at least portions of a sub-set of the identified log messages. The at least one processing circuit 30 may be operative such that the query generated by the query generation 42 includes a query phrase (e.g., "What is the timestamp format in the following log messages") or command phrase (e.g., "Provide the timestamp format for the following log messages"), in association with at least portions of a sub-set of the identified log messages. The at least one processing circuit 30 is operative to receive the timestamp format from the data-driven processing model (e.g., the LLM 12) responsive to the query. The at least one processing circuit 30 may be operative to perform a further query generation 43 to communicatively interface with the data-driven processing model (e.g., the LLM 12) to obtain the regex pattern for the timestamp format. The at least one processing circuit 30 may be operative such that the further query generation 43 generates the further query based on the obtained timestamp format. The at least one processing circuit 30 may be operative such that the further query generated by the further query generation 43 includes a query phrase (e.g., "What is the regex pattern for ...") or command phrase (e.g., "Provide the regex pattern for ...") in association with the obtained timestamp format and/or at least portions of the sub-set of log messages.

The timestamp detection 33 and/or the timeseries data extraction 35 may comprise a timestamp extraction 44. The timestamp extraction 44 comprises extracting the timestamps from the several log messages, based on the timestamp format and/or the regex pattern obtained by communicatively interfacing with the data-driven processing model (e.g., the LLM 12). The timestamp extraction 44 comprises parsing the several log messages identified by the log message identification 32 to extract, using the timestamp format and/or the regex pattern, the timestamp of the respective log message.

The timeseries data extraction 35 may optionally comprise a flagging 45 of portions of the log messages, which are irrelevant for the timeseries data. For illustration, digits or other numerical or alphanumerical portions irrelevant for the extraction of the timeseries data (e.g., because they include name and/or serial number information irrelevant for the extraction of the timeseries data) may be flagged. The flagging 45 may comprise parsing the several log messages identified by the log message identification 32, identifying portions irrelevant for the timeseries extraction in at least some of the several log messages, and storing the flags for each of the several log messages in which portions irrelevant for the timeseries data extraction were found.

The timeseries data extraction 35 may comprise a label extraction 46 and a value extraction 47. The label extraction 46 and value extraction 47 may comprise parsing the several log messages identified by the log message identification 32, identifying labels (such as labels related to usage and/or a state of an apparatus component of the apparatus 14) and identifying values for the respective labels in the several log messages. Thus, for at least some of the several log messages, the timeseries data extraction 35 may identify n-tuples (e.g., 3-tuples) including time data based on the timestamp of the respective log message, a label included in the respective log message, and a value for that label in the respective log message. The timeseries data extraction 35 may be operative to sort the n-tuples in such a way that the timeseries data includes, for each extracted label, m-tuples (e.g., 2-tuples) including the timestamps and the values for the respective label, as extracted from the several log messages. The labels may be selected from a set of labels, which may be pre-defined or which may be identified in a data-driven manner, based on the log file.

The output generation 36 comprises a control operation 44 to perform an action or several control operations performed based on the timeseries data. The control operation 44 may comprise any one or any combination of a control operation that affects operations of the apparatus 14, a storage system control operation, or an HMI control operation.

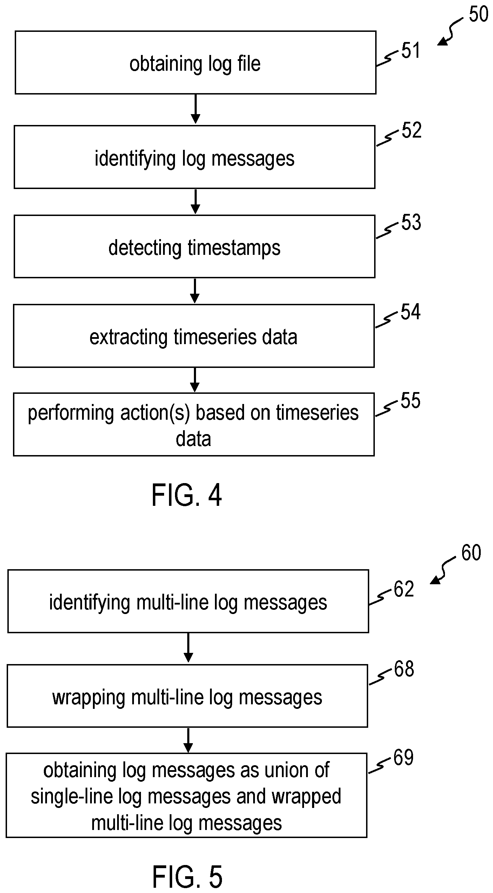

Figure 4 is a flow chart of a method 50. The method 50 may be performed automatically by the processing system 20. The method 50 may be performed to extract timeseries data from a log file of an optical apparatus or another apparatus comprising a source of electromagnetic radiation and/or a detector for electromagnetic radiation.

At process block 51, the processing system 20 obtains the log file. The processing system 20 may obtain the log file from the apparatus 14 or a data repository 13 separate from the apparatus 14. While the processing of a log file from one apparatus will be primarily explained with reference to Figure 4, the same processing system 20 may be operative to process the log files of several apparatuses having a same or different hardware configuration, using the processing operations discussed herein. Different log files from different apparatuses may be processed in parallel or sequentially.

At process block 52, the processing system 20 identifies several log messages in the log file. Identifying several log messages may comprise identifying and wrapping multi-line log messages. Identifying the several log messages may comprise forming a union of single-line log messages and wrapped multi-line log messages. Identification of multi-line log messages will be described in more detail with reference to Figure 5, Figure 6, Figure 7, and Figure 8. Wrapping of multi-line log messages may comprise concatenating any line that is not a first line of a multi-line log message with its preceding line. To perform the concatenation, the processing system 20 may execute a routine of detecting lines of multi-line log messages that are different from the first lines of the multi-line log messages. Statistics of line start patterns may be used by the processing system 20 to detect lines of multi-line log messages that are different from the first lines of the multi-line log messages.

At process block 53, the processing system 20 detects timestamps. Detecting timestamps may comprise communicatively interfacing with the LLM 12 or another AI model to obtain, based on a query that includes at least portions of some of the identified log messages, information on the timestamp format and/or the timestamp regex pattern. Detecting the timestamps may comprise generating several sequential queries and providing the several queries to the LLM 12 or other AI model, to obtain first the timestamp format and thereafter the regex pattern. Detecting the timestamps may comprise parsing the several messages of the log file to detect the timestamps, based on the timestamp format and regex pattern obtained by communicatively interfacing with the LLM 12 or other AI model.

At process block 54, the processing system 20 extracts the timeseries data. Extracting the timeseries data may comprise extracting, in addition to the timestamps, labels and values associated with the labels from the several messages. Extracting the timeseries data may comprise parsing the several messages to obtain, for each one of several different labels (which may relate to different apparatus components of the apparatus 14) several m-tupels (e.g., 2-tupels), each including time data based on a timestamp of a log message in which the respective label was identified and the value for that label in the respective log message. Different labels may relate to apparatus component usage, apparatus component state, or other parameters related to the apparatus 14 or an object with which the apparatus interacts.

At process block 55, the processing system 20 performs an action or several actions based on the timeseries data. The action or the several action may comprise any one or any combination of
- a control action that affects operation of the apparatus 14 (e.g., by restricting its functionality based on an issue for which the timeseries data is indicative, or by performing a corrective or mitigating action such as triggering a detector and/or radiation source re-calibration);
- controlling an HMI to perform an output operation of an alert, warning, or other status information related to the apparatus, based on the timeseries data;
- causing storage of the timeseries data for use in, e.g., identifying apparatuses that require maintenance and/or inspection, or for automatically performing control operations that affect apparatus operation.

Figure 5 is a flow chart of process 60 of detecting multi-line log messages. The process 60 may be performed automatically by the processing system 20. The process 60 may be performed to implement process block 52 of the method 50 of Figure 4.

At process block 62, multi-line log messages are identified. Process block 62 may comprise identifying lines of a multi-line log message other than the first line of the multi-line log message. Process block 62 may comprise a data-driven determination of lines of multi-line log messages other than the first lines, based on statistics of line start patterns of the lines of the log file. Thereby, lines of multi-line log messages other than the first lines can be identified without requiring and without using user input that specifies characteristics of multi-line log messages (such as line start patterns of lines of multi-line log messages other than the first lines).

At process block 68, wrapping of multi-line log messages may be performed. This may comprise concatenating lines of any multi-line log message other than the first line of the multi-line log message to the preceding line of the log file.

At process block 69, the processing system 20 obtains the several log messages, with the several log messages comprising both single-line log messages that are contained in one line of the log file only, and the wrapped multi-line log messages.

The process 60 allows multi-line log messages (and in particular, the second, third, etc. lines of multi-line log messages) to be identified in a data-driven manner, without requiring any information on the format of the multi-line log message. Thereby, the log file processing method using the process 60 is versatile in that it can be applied to log files from apparatuses having a variety of hardware configurations. Multi-line log messages can be identified in a data-driven manner and without relying on prior human-based input specifying the format of multi-line log messages. The risk of human-induced error is mitigated thereby.

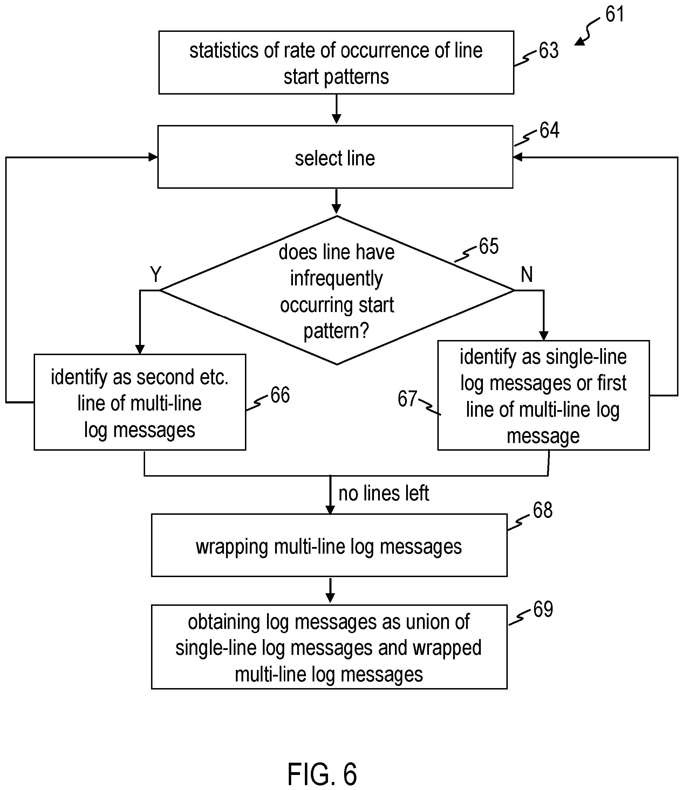

Figure 6 is a flow chart of process 61 of detecting multi-line log messages. The process 60 may be performed automatically by the processing system 20. The process 60 may be performed to implement process block 52 of the method 50 of Figure 4. Process blocks 63, 64, 65, 66, and 67 of the process 60 may be used to implement process block 62 of the process 60 of Figure 5.

At process block 63, the processing system 20 determines rates of occurrence of different line start patterns for all lines of the log file. Determining the rates of occurrence may comprise parsing all lines of the log file, assigning a line start pattern of the respective line to one of a set of line start patterns, counting the numbers of occurrence of the different line start patterns, and dividing the numbers of occurrence by the total number of lines to determine the rate of occurrence of the respective line start pattern.

At process blocks 64 to 67, an iteration is performed over the lines of the log file to identify all lines of multi-line messages that are not a first line of a multi-line message (thereby inherently identifying the multi-line messages). Process blocks 64 to 67 are iterated until the parsing reaches the end of the log file.

At process block 64, a line is selected. In a first iteration, the first line or second line of the log file is selected (with selection of the second line being an option as the process looks for the second, third, etc. lines of multi-line messages). In subsequent iterations, the line number may be incremented by one, shifting the process to the next line.

At process block 65, the processing system 20 determines whether the line under consideration has a line start pattern having an occurrence rate that is infrequent in the log file. Thereby, the start of a new log message (which has a frequently occurring line start pattern) can be discriminated from the start of a line that is a second or higher line of a multi-line log message, based on the statistics of line start patterns obtained at process block 64. Determining whether the line start pattern of the line is an infrequently occurring line pattern may performed based on various criteria, such as:
- A line start pattern is considered to be infrequently occurring selectively dependent on whether the occurrence rate of the line start pattern is less than a maximum of the occurrence rates determined at process block 63.
- A line start pattern is considered to be infrequently occurring if it is less than a rate threshold. The processing system 20 may be operative such that the rate threshold can be pre-defined or configurable (in which case the processing system 20 may be operative to control an HMI to allow the rate threshold to be configured).
- A line start pattern is considered to be infrequently occurring if its occurrence rate is less than a value that is determined based on the statistics of occurrence rates determined at process block 63. For illustration, the processing system 20 may determine the line to have a line start pattern that is infrequent if it does not belong to the M > 1 line start patterns having the highest occurrence rates (such as two, three, or more line start patterns having the highest occurrence rates). For further illustration, a standard deviation of the occurrence rates may be determined based on the statistics determined at process block 63, line start patterns being common line start patterns may be identified as being included within, e.g., the standard deviation of occurrence rates, and a line may be determined to have a line start pattern identified as being infrequent if it is outside the standard deviation.

Depending on the result of the determination at process block 65, the line is determined to be a line of a multi-line log message other than the first line of the multi-line log message (process block 66) or a single-line log message or the first line of a multi-line log message (process block 67).

If the end of the log file is not yet reached, the process returns to process block 64, moving on to the next line in the log file. Otherwise, the process continues at process block 68.

At process block 68, wrapping of multi-line log messages may be performed. This may comprise concatenating lines of any multi-line log message other than the first line of the multi-line log message (identified at process block 65 and 66) to their preceding lines.

At process block 69, the several messages of the log file are obtained as a union of the single-line log messages and multi-line log messages. This union is the inherent result when parsing the lines of the log file and performing the wrapping of multi-line log message (process block 68).

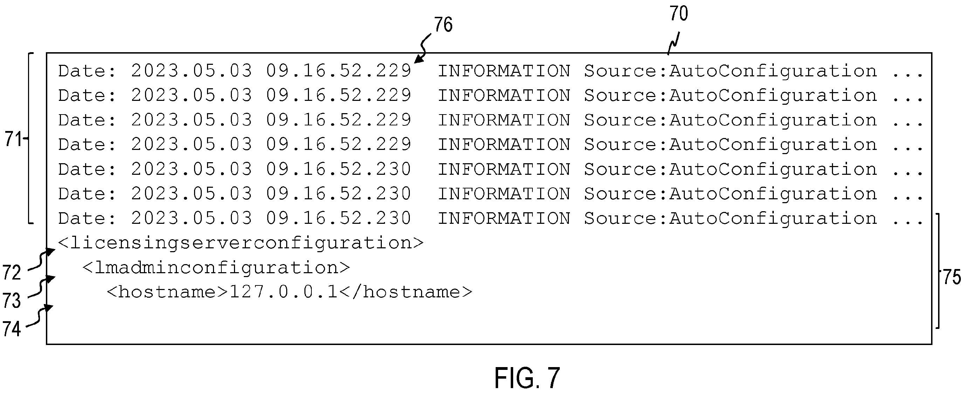

Figure 7 illustrates a portion of an exemplary log file 70. Lines of the log file 70 include lines 71 having a frequently occurring line start pattern and other lines 72, 73, 74 having an infrequently occurring line start pattern. The lines 72, 73, 74 having the infrequently occurring line start pattern can be identified to be lines of a multi-line log message 75 other than the first line of the multi-line log message 75, based on the occurrence rate of the respective line start pattern in the log file. This ensures that, when extracting the timeseries data, the lines 72, 73, 74 that are lines of a multi-line log message other than the first line of the multi-line log message, are not incorrectly treated as being new log messages to be considered. Thereby, the quality of the timeseries extraction and of the monitoring of the apparatus 14 is enhanced. The log messages comprising the single-line log messages and the multi-line log messages 75 respectively include a timestamp 76.

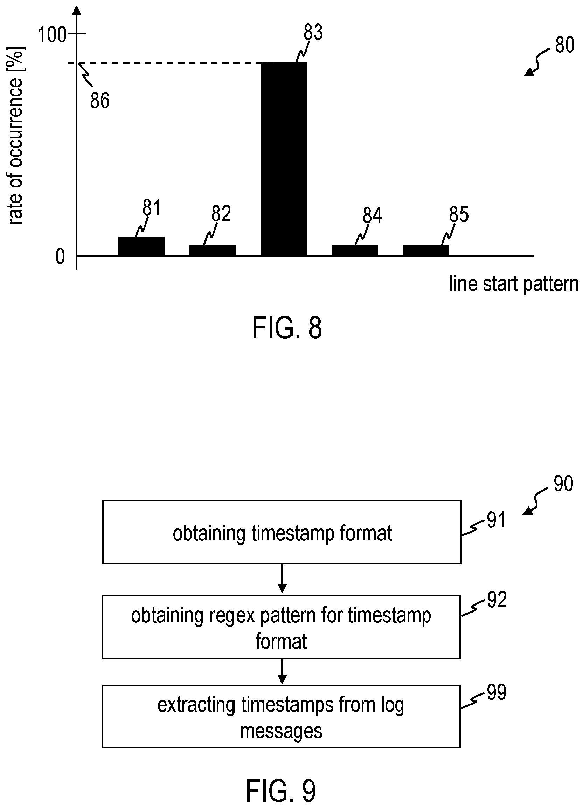

Figure 8 illustrates several rates of occurrence 81, 82, 83, 84, 85 of line start patterns. Single-line log messages and first lines of multi-line log messages can have a similar (or a few similar) line start patterns, giving rise to a high rate of occurrence 83 of a frequently encountered line start pattern. Lines of multi-line log messages other than the first line may have different start patterns, giving rise to several occurrence rates 81, 82, 84, 85 that are less frequent that the rate of occurrence 83 that is a maximum rate of occurrence 86 of the start line patterns identified for the log file. The processing system 20 is operative to determine the statistics of occurrence rates and use the determined statistics to identify lines of multi-line log messages other than the first line of the multi-line log message.

Figure 9 is a flow chart of process 90 of detecting timestamps in the several log messages contained in the log file. The process 90 may be performed automatically by the processing system 20. The process 90 may be performed to implement process block 53 of the method 50 of Figure 4.

At process block 91, the processing system 20 obtains the timestamp format. Obtaining the timestamp format may comprise communicatively interfacing, by the processing system 20, with an AI model (e.g., the LLM 12) to obtain the timestamp format. Obtaining the timestamp format may comprise generating a query to the AI model (e.g., the LLM 12), using at least portions of a sub-set of the several log messages. The processing system 20 may be operative to remove or obfuscate potentially sensitive data from the portions when formulating and submitting the query to the AI model (e.g., the LLM 12).

At process block 92, the processing system 20 obtains the regex pattern for the timestamp format. Obtaining the regex pattern may comprise generating a further query to the AI model (e.g., the LLM 12), using the previously obtained timestamp format.

At process block 99, the processing system 20 extracts the timestamps from the several log messages, using at least the regex pattern (and optionally the timestamp format) obtained at process blocks 91 and 92.

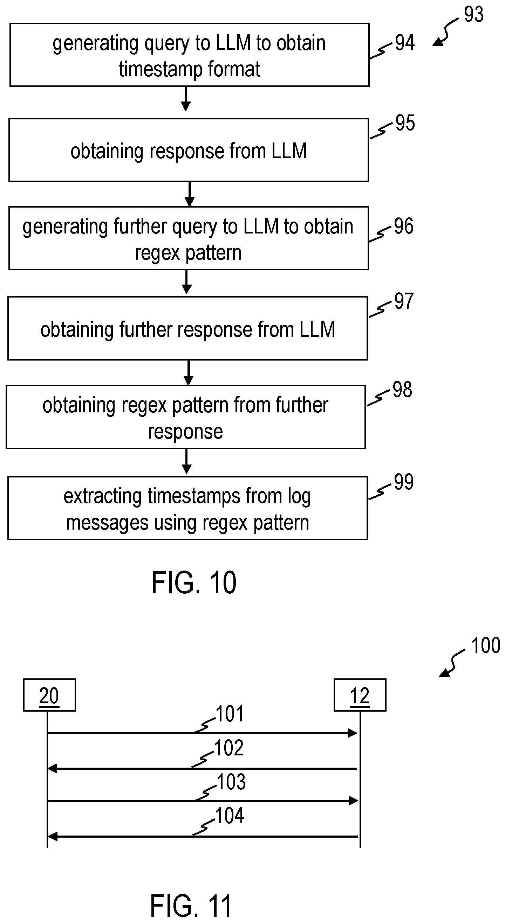

Figure 10 is a flow chart of process 90 of detecting timestamps in the several log messages contained in the log file. The process 90 may be performed automatically by the processing system 20. The process 90 may be performed to implement process block 53 of the method 50 of Figure 4. Process blocks 94 and 95 may be performed to implement process block 91 of the process 90 of Figure 9. Process blocks 96, 97, and 98 may be performed to implement process block 92 of the process 90 of Figure 9.

At process block 93, the processing system 94 generates a query to the LLM 12 to obtain the timestamp format. The query may be generated based on at least portions of a sub-set of the several log messages. Generating the query based on the sub-set of the several log messages may comprise generating a natural language query including at least portions of the sub-set of the log messages, and providing the natural language query to the LLM 12 to obtain information on the timestamp format in response thereto. Generating the query based on the sub-set of the several log messages may comprise removing or obfuscating portions of the sub-set of the several log messages that can include sensitive information. For illustration, portions related to an identity of a subject (such as a patient's name or birthdate), a medical condition (such as a diagnosis), characteristics of the apparatus or its apparatus components (such as identifiers for the apparatus components used in the apparatus), an identity of an object inspected or manufactured by the apparatus (such as product of manufacture that is inspected by or manufactured using the at least one apparatus), and/or characteristics of an object inspected manufactured by the apparatus (such as a product of manufacture that is inspected by or manufactured using the at least one apparatus) may be removed or obfuscated when generating the query.

At process block 95, the processing system 20 obtains a response from the LLM 12, the response specifying the timestamp format. If several timestamp formats are used in the log file, the response may specify the several timestamp formats.

At process block 96, the processing system 20 generates a further query to the LLM 12 to obtain one or several regex pattern(s) for the one or several timestamp format(s). The further query may be generated based on the one or several timestamp format(s). Generating the further query based on the one or several timestamp format(s) may comprise generating a further natural language query including at least a request to provide regex pattern(s) for the timestamp format, and providing the further natural language query to the LLM 12 to obtain information on the regex pattern(s) in response thereto.

At process block 97, the processing system 20 obtains a further response from the LLM 12, the further response specifying the one or several regex pattern(s).

At process block 98, the processing system 20 obtains the one or several regex pattern(s) from the further response.

At process block 99, the processing system 20 extracts the timestamps from the several log messages, using at least the regex pattern (and optionally the timestamp format).

Figure 11 is a signaling diagram illustrating how the processing system 20 can obtain the one or several timestamp format(s) and the one or several regex pattern(s) for use in extracting timestamps from the several log messages, without requiring user input specifying the timestamp format(s) or regex pattern(s).

The processing system 20 generates a query 101 and provides the query 101 to the LLM 12. The query 101 comprises a natural language query specifying that information on the timestamp format is requested. The natural language query includes at least portions of a sub-set of the several log messages of the log file.

The processing system 20 receives a response 102 that specifies one or several timestamp format(s).

The processing system 20 subsequently generates a further query 103 and provides the further query 103 to the LLM 12. The further query 103 comprises a further natural language query specifying that information on the regex pattern is requested. The further natural language query includes at least a reference to the timestamp format(s).

The processing system 20 receives a further response 104 that specifies the one or several regex pattern(s).

The processing system 20 may communicatively interface with the LLM 12 over a communication system which may comprise a WAN, a cellular network, and/or a LAN.

With continued reference to Figure 11, operation of the LLM 12 will be described. The LLM 12 may be executed on at least one server or another processing system. The LLM 12 has an interface operative to enable communicative coupling with the processing system 20 over a communication system which may comprise a WAN, a cellular network, and/or a LAN.

The LLM 12 receives the query 101. The query 101 comprises a natural language query specifying that information on the timestamp format is requested. The natural language query includes at least portions of a sub-set of the several log messages of the log file.

The LLM 12 generates, based on the query 101, a response 102 that specifies one or several timestamp format(s). The LLM 12 provides the response 102 to the processing system 20.

The LLM 12 subsequently receives the further query 103. The further query 103 comprises a further natural language query specifying that information on the regex pattern is requested. The further natural language query includes at least a reference to the timestamp format(s).

The LLM 12 generated, based on the further query 103, the further response 104 that specifies the one or several regex pattern(s). The LLM 12 provides the further response 104 to the processing system 20.

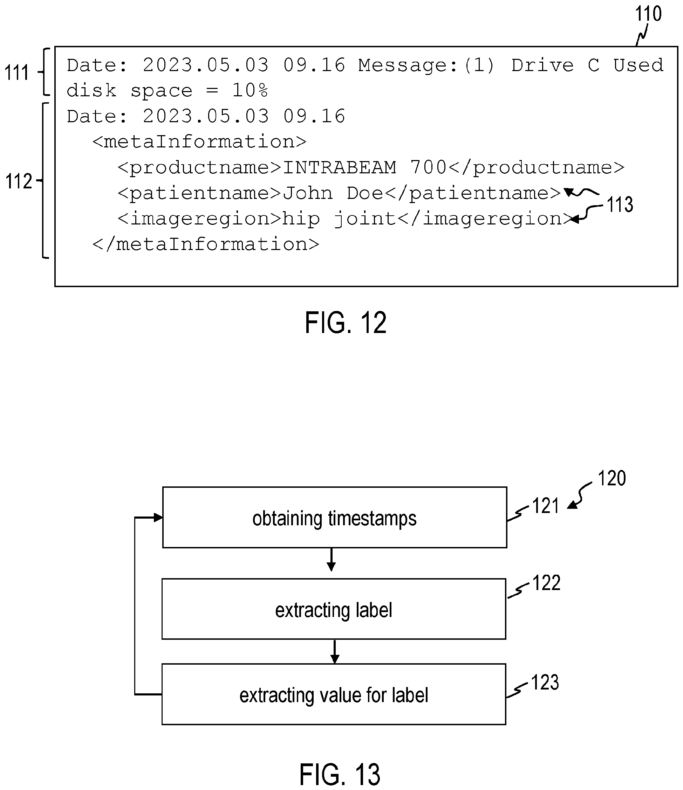

Figure 12 is an illustrative representation of several log messages of a log file 110. The several log messages include a log message 111 that relates to usage of an apparatus component of the apparatus 14 and that does not include sensitive information. The several log messages include another log message 112 that included sensitive information 113 such as an identity of a subject (such as a patient's name or birthdate), a medical condition (such as a diagnosis), characteristics of the apparatus or its apparatus components (such as identifiers for the apparatus components used in the apparatus), an identity of an object inspected or manufactured by the apparatus (such as product of manufacture that is inspected by or manufactured using the at least one apparatus), and/or characteristics of an object inspected manufactured by the apparatus (such as a product of manufacture that is inspected by or manufactured using the at least one apparatus). When generating the query to obtain the timestamp format, the processing system 20 may be operative to obfuscate or remove such sensitive information 113. The processing system 20 may be operative to identify sensitive information 113 based on, e.g., metadata in the log file.

Figure 13 is a flow chart of a process 120 of extracting timeseries data. The process 120 may be performed automatically by the processing system 20. The process 120 may be performed to implement process block 54 of the method 50 of Figure 4. Process blocks 121, 122, and 123 may be repeated iteratively for the several log messages of the log file, e.g., when sequentially parsing the several log messages.

At process block 121, the processing system 20 obtains the timestamp extracted from the log file for the log message that is being considered in the respective iteration. Obtaining the timestamps may comprise retrieving previously extracted timestamp (which may be stored in the storage system 23) or extracting the timestamp, based at least on the obtained regex pattern.

At process block 122, the processing system 20 extracts a label from the log message under consideration. Extracting the label may comprise determining whether the log message comprises a string related to a label of interest (such as hard drive usage, light source state and/or optical detector state).

At process block 123, the processing system 20 extracts a value from the log message under consideration, which value is associated with the extracted label. Extracting the value may comprise extracting a numerical value indicative of a state of at least one apparatus component, without being limited thereto.

Process blocks 121, 122, and 123 are iteratively repeated until the end of the log file is reached.

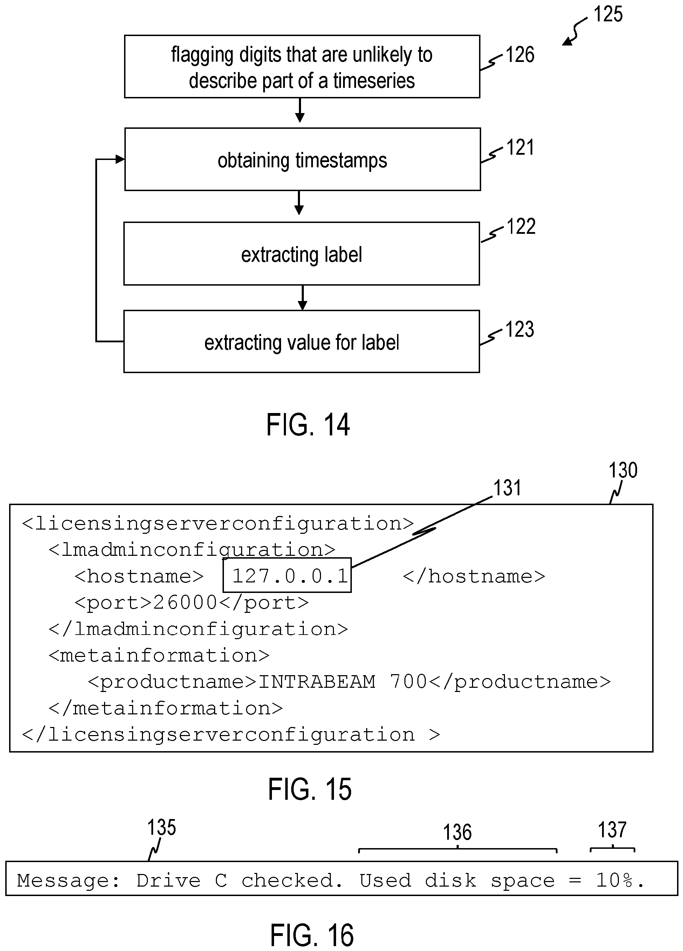

Figure 14 is a flow chart of a process 125 of extracting timeseries data. The process 125 may be performed automatically by the processing system 20. The process 125 may be performed to implement process block 54 of the method 50 of Figure 4. Process blocks 121, 122, and 123 may be performed as previously described in association with Figure 13.

At process block 126, the processing system 20 may parse the several log messages and may flag portions (e.g., digits) in the several log messages that are unlikely to describe part of a timeseries of interest. For illustration, digits specifying communication addresses such as a hostname may be flagged. Information on the flagged portions may be stored in association with the respective log messages.

Process blocks 121, 122, and 123 may then be performed in an iterative manner, while parsing the several log messages and ignoring the portions flagged as being irrelevant for the timeseries in process block 126.

Figure 15 is an illustrative representation of several lines of a multi-line log messages of a log file 130. The log message 130 comprises digits 131 that are unlikely to form part of a timeseries of interest for operating and/or monitoring the apparatus 14. The digits 131 may be automatically detected and flagged by the processing system 20. The digits 131 may be removed from consideration when parsing the several messages.

Figure 16 is an illustrative representation of a portion of a log message 135 (with the timestamp removed). The processing system 20 is operative to identify a label 136 in the log message 135. The label 136 may relate to a parameter (e.g., a state and/or usage) of an apparatus component of the apparatus 14. The processing system 20 is operative to identify a value 137 for the label 136 in the log message 135. The value 137 may be a numerical value quantifying the parameter of the apparatus component.

The processing system 20 may be operative to extract the timeseries data such that it includes, for every label, one or several pairs of time data (extracted from the timestamp of the respective log message in which the label was found) and value (also extracted from the same log message in which the label was found). Thereby, the processing system 20 is operative to generate a structured representation that facilitates the performance of automatic control operations and/or monitoring of the apparatus 14.

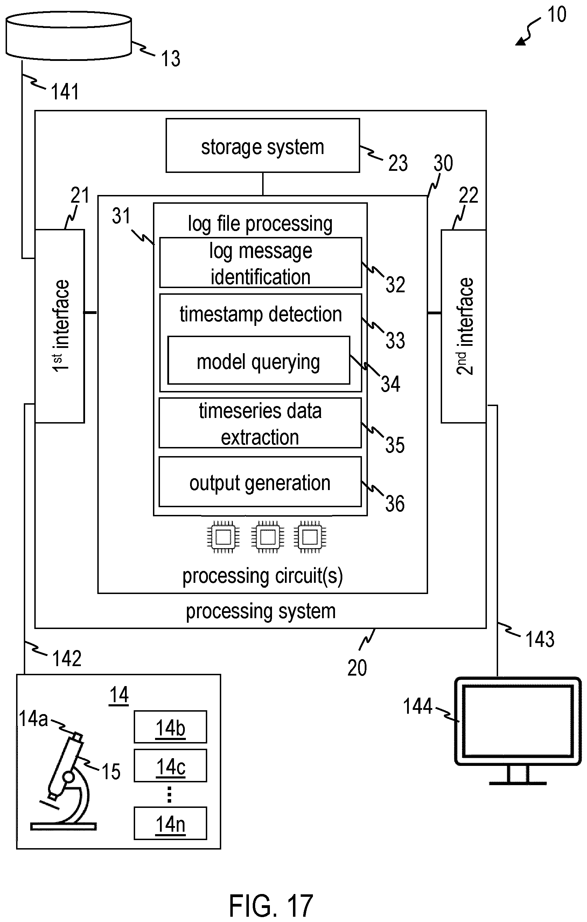

Figure 17 is a schematic representation of a system 10 that comprises the processing system 20. The system 10 further comprises the apparatus 14, the data repository 13 operative to store the log file of the apparatus 14, and the HMI 144. The processing system 20 is operative to obtain, over a first data communication link 141, the log file from the data repository. The processing system 20 may be operative to control, based on the extracted timeseries data, the apparatus 14. The processing system 20 may be operative to provide, over a second data communication link 142, control commands or other control data to the apparatus 14 to control the apparatus 14 based on the timeseries data. The processing system 20 may be operative to provide, over the first data communication line 141, storage commands to the data repository to store the timeseries data for subsequent use in apparatus control or maintenance. Alternatively or additionally, the processing system 20 may be operative to store the timeseries data in the storage system 23 for subsequent use in apparatus control or maintenance. The processing system 20 may be operative to control, over a connection 143 that may be implemented as a data connection or signal line, the HMI 144 to output an alert, warning, or other status information related to the apparatus 14.

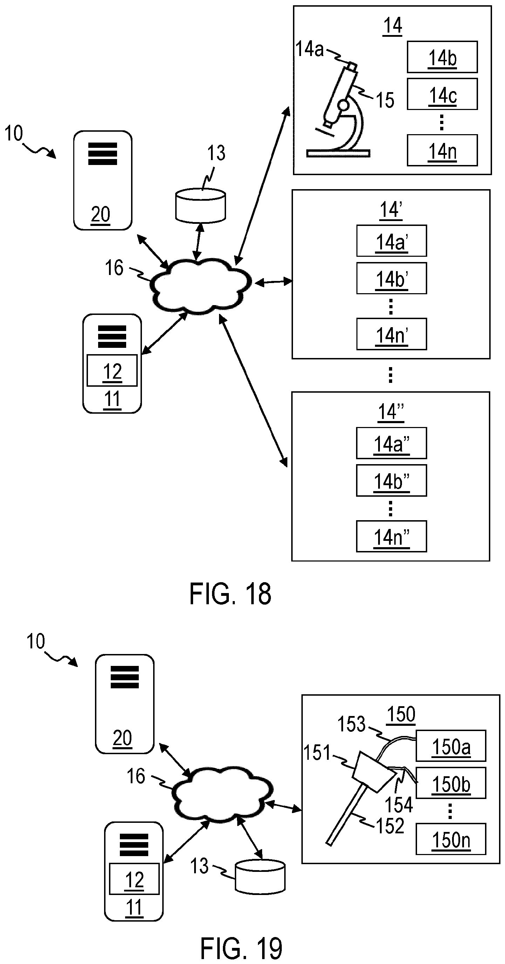

Figure 18 is a schematic representation of a system 10 that comprises the processing system 20. The system 10 comprises a plurality of apparatuses 14, 14', 14", including the apparatus 14 and one or several other apparatuses 14', 14". Each of the apparatuses 14, 14', 14" may be operative to provide an associated log file. The processing system 20 is operative to process the plurality of log files of the plurality of apparatuses 14, 14', 14", using the techniques disclosed herein. The processing system 20 does not require user input specifying the format of multi-line log messages and/or timestamp format and/or regex patterns of the different log files generated for different ones of the plurality of apparatuses 14, 14', 14". The processing disclosed herein enables the processing system 20 to identify multi-line log messages in a data-driven manner. The processing disclosed herein also enables the processing system 20 obtain the timestamp format and/or regex pattern in a data-driven manner, by communicatively interfacing with the LLM.

The plurality of apparatuses 14, 14', 14" may comprise apparatuses of a same apparatus type (such as optical microscope or spectroscopy apparatus or medical apparatus), which may have different hardware configurations, or apparatuses of different apparatus types (e.g., both a microscope and a medical or industrial apparatus). For illustration, the other apparatus 14' may comprise another plurality of apparatus components 14a', 14b', ... 14n', at least some of which may be different from the apparatus components 14a, 14b, ... 14n of the apparatus 14. The other apparatus 14" may comprise yet another plurality of apparatus components 14a", 14b", ... 14n", at least some of which may be different from the apparatus components 14a, 14b, ... 14n of the apparatus 14 and/or from the other apparatus components 14a', 14b', ... 14n' of the apparatus 14'. Thus, the plurality of apparatuses 14, 14', 14" may comprise apparatuses for which at least one of timestamp format and timestamp regex pattern may be different in the respective log files. The processing system 20 is operative to obtain the information on the timestamp format and/or regex pattern by interfacing with the LLM 12, without requiring prior input from a user that specifies this information.

Figure 19 is a schematic representation of a system 10 that comprises the processing system 20. The system 10 comprises an apparatus configured as a medical apparatus 150. The medical apparatus 150 may comprise a medical device body having an apparatus portion 152 configured for insertion into or other interaction with a human or animal body. The medical apparatus 150 comprises a source 150a of electromagnetic radiation (e.g., a source of radiation in the visible, infrared, and/or ultraviolet spectral range) coupled to the apparatus portion 152 via a first waveguide 153. The medical apparatus 150 may comprise a detector 150b of electromagnetic radiation (e.g., a detector for radiation in the visible, infrared, and/or ultraviolet spectral range) coupled to the apparatus portion 152 via a second waveguide 154. The medical apparatus 150 may comprise additional apparatus components 150n, such as control and/or internal calibration components.

The processing system 20 is a processing system 20 operative to process the log file of a medical apparatus (such as a medical imaging apparatus or a medical surgical apparatus) to extract timeseries data and cause one or several actions to be performed in relation to the medical apparatus based on the timeseries data.

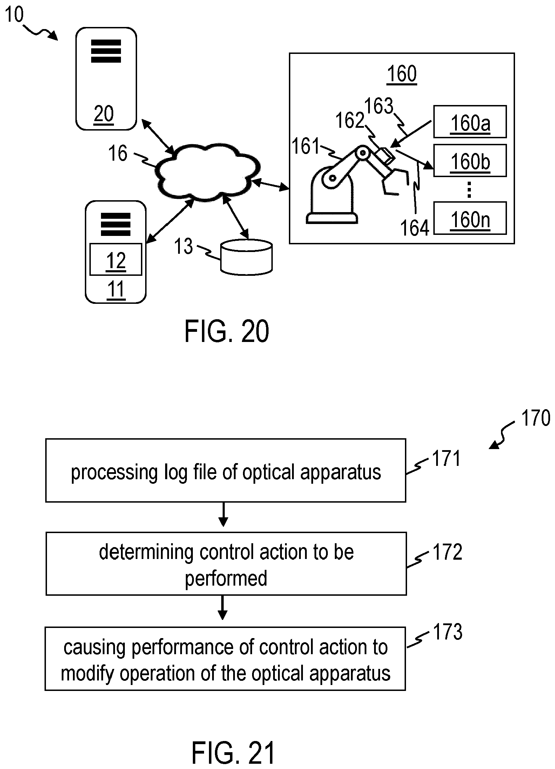

Figure 20 is a schematic representation of a system 10 that comprises the processing system 20. The system 10 comprises an apparatus configured as an industrial inspection or manufacturing apparatus 160. The industrial apparatus 160 may comprise an optical element 162 configured for attachment to a manufacturing system component 161 and/or a product of manufacture. The industrial apparatus 160 comprises a source 160a of electromagnetic radiation 163 (e.g., a source of radiation in the visible, infrared, and/or ultraviolet spectral range) operative to output electromagnetic radiation towards the optical element 162. The medical apparatus 160 may comprise a detector 160b of electromagnetic radiation (e.g., a detector for radiation in the visible, infrared, and/or ultraviolet spectral range) operative to receive return electromagnetic radiation 164, e.g., from the optical element 162 or otherwise from the manufacturing system component 161 and/or a product of manufacture. The medical apparatus 160 may comprise additional apparatus components 160n, such as control and/or internal calibration components.

The processing system 20 is a processing system 20 operative to process the log file of an industrial apparatus (such as a medical imaging apparatus or a medical surgical apparatus) to extract timeseries data and cause one or several actions to be performed in relation to the industrial apparatus based on the timeseries data.

While one processing system 20 is schematically shown in Figure 2, Figure 17, Figure 18, Figure 19, and Figure 20, the system 10 may respectively comprise several processing systems 20 operative as disclosed herein.

Figure 21 is a flow chart of a method 170. The method 170 may be performed automatically by the processing system 20 or by the system 10 comprising the processing system 20.

At process block 171, the processing system 20 processes the log file of at least one optical apparatus to extract timeseries data. Process block 171 may be performed as discussed with reference to Figure 1 to Figure 20. The at least one apparatus may comprise one or several of: a microscope; a medical apparatus; a medical imaging apparatus; an ophthalmic apparatus; a manufacturing apparatus; an industrial measurement apparatus; a quality control apparatus; an image acquisition apparatus; a planetarium apparatus; a spectroscopic apparatus.

At process block 172, the processing system 20 determines, based on the timeseries data, at least one control action that is to be performed. The at least one control action may comprise a control action that affects operation of the at least one apparatus, such as a mitigating or corrective control action that is performed responsive to an issue detected based on the timeseries data.

At process block 173, the processing system 20 causes execution of the control action. This may comprise modifying operation of the at least one apparatus.

While embodiments have been described with reference to the drawings, modifications and alterations may be implemented in other embodiments:
- For illustration, while processing systems and processing methods have been described in which the processing system 20 is operative to communicatively interface with a LLM 12 to obtain the timestamp format and regex pattern, the processing system 20 may be operative to interact with another data-driven processing model (e.g., a dedicated AI model for providing information on timestamp formats and/or regex patterns) to obtain the timestamp format and regex pattern.
- For further illustration, while processing systems and processing methods have been described that determine multi-line log messages based on rates of occurrence of different line start patterns, other techniques may be used to identify lines of multi-line log messages (such as techniques that compare string patterns in successive lines).
- For further illustration, while processing systems and processing methods have been described in which extraction of timeseries data comprises both the extraction of a label and the extraction of an associated value, modifications may be implemented in which it is not required that pairs of label / value be extracted or in which several values may be extracted for a same label.
- For further illustration, while the AI model (e.g., the LLM 12) may be implemented on a further processing system 11 separate from the processing system 20, the AI model may also be implemented by the processing system 20.
- For further illustration, while the processing system 20 may be operative to obtain and use a regex pattern for extracting the timestamps, other string patterns may be used for timestamp extraction.
- While exemplary apparatuses are discussed in association with the Figures, the processing system and processing method may be used in association with a wide variety of apparatuses comprising a source and/or a detector for electromagnetic radiation, such as optical apparatuses.

Various effects and advantages are attained by embodiments of the invention. For illustration, the processing system and processing method disclosed herein provide an enhanced technique of processing log files of an apparatus having a plurality of apparatus components, with the processing being operative to extract timeseries data without requiring a priori input specifying string patterns that indicate a timestamp to extract timeseries information. The risk of human-induced error in automatic apparatus monitoring and/or control, based on timeseries extracted from log files, is thereby reduced.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures, and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method of processing a log file (37) of at least one apparatus (14; 14, 14', 14"; 150; 160), the at least one apparatus (14; 14, 14', 14"; 150; 160) comprising a plurality of apparatus components (14a-14n, 15; 14a-14n, 15, 14a'-14n', 14a"-14n"; 150a-150n, 151, 152, 153, 154; 160a-160n, 162), the plurality of apparatus components (14a-14n, 15; 14a-14n, 15, 14a'-14n', 14a"-14n"; 150a-150n, 151, 152, 153, 154; 160a-160n, 162) comprising a source (14b; 14b, 14b', 14b"; 150a; 160a) of electromagnetic radiation and/or a detector (14a; 14a, 14a', 14a"; 150b; 160b) for electromagnetic radiation (162), the method comprising:
obtaining, by at least one processing system (20; 11, 20), the log file (37), the log file (37) comprising a plurality of lines;
identifying, by the at least one processing system (20; 11, 20), several log messages (71, 75; 111; 112) contained in the log file (37), comprising identifying one or several multi-line log messages (72-74) distributed over more than one line of the plurality of lines, the several log messages (71, 75; 111; 112) being indicative events recorded by at least one of the plurality of apparatus components (14a-14n, 15; 14a-14n, 15, 14a'-14n', 14a"-14n"; 150a-150n, 151, 152, 153, 154; 160a-160n, 162);
detecting, by the at least one processing system (20; 11, 20), timestamps (76) in the several log messages (71, 75; 111; 112), comprising communicatively interfacing with a data-driven processing model (12) to obtain timestamp-related information (102, 104) that comprises data (102) specifying a timestamp format;
extracting, by the at least one processing system (20; 11, 20), timeseries data from the several log messages (71, 75; 111; 112) based at least on the timestamp-related information (102, 104); and
performing, by the at least one processing system (20; 11, 20), at least one operation based on the timeseries data.

2. The method of claim 1, wherein the data-driven processing model (12) comprises a large language model, LLM (12).

3. The method of claim 2, wherein the timestamp-related information (102, 104) comprises the data (102) specifying the timestamp format and data (104) specifying a string pattern for the timestamp format.

4. The method of claim 3, wherein communicatively interfacing with the data-driven processing model (12) to obtain the timestamp-related information (102, 104) comprises:
obtaining, by the at least one processing system (20; 11, 20), the data (102) specifying the timestamp format, comprising generating a query (101) to the LLM (12) to obtain the data (102) specifying the timestamp format, the query (101) being generated based on a sub-set of the several log messages (71, 75; 111; 112) ; and
obtaining, by the at least one processing system (20; 11, 20), the data (104) specifying the string pattern to detect a timestamp location in the several log messages (71, 75; 111; 112), comprising generating a further query (102) to the LLM (12) to obtain the data (104) specifying the string pattern for the timestamp format, the further query (103) being generated based on the timestamp format.

5. The method of claim 4, wherein generating the query (101) based on the sub-set of the several log messages (71, 75; 111; 112) comprises removing or obfuscating portions (113) of the sub-set of the several log messages (71, 75; 111; 112) that can include sensitive information.

6. The method of any one of claims 3 to 5, wherein extracting the timeseries data from the several log messages (71, 75; 111; 112) comprises extracting, for each of the several log messages (71, 75; 111; 112), a timestamp (76), wherein the at least one processing system (20; 11, 20) extracts the timestamp (76) based on the string pattern.

7. The method of any one of claims 3 to 6, wherein the string pattern comprises a regular expression, regex, pattern.

8. The method of any one of the preceding claims, wherein identifying the one or several multi-line log messages (75) comprises
determining rates of occurrence (81-85) of different line start patterns in the log file (37); and
identifying lines in the log file (37) having a line start pattern for which a rate of occurrence (81, 82, 84, 85) in the log file (37) is less than a maximum (86) of the rates of occurrence.

9. The method of claim 8, wherein identifying the several log messages (71, 75; 111; 112) comprises wrapping each of the one or several multi-line log messages (75).

10. The method of any one of the preceding claims,
wherein extracting the timeseries data from the several log messages (71, 75; 111; 112) further comprises extracting, for at least some of the several log messages (71, 75; 111; 112), a label (136),
wherein extracting the timeseries data comprises extracting, for each label (136) extracted from the several log messages (71, 75; 111; 112), tuples that respectively include
a value (137) for the label (136); and
time data that is based on the timestamp (76).

11. The method of any one of the preceding claims, wherein the at least one control operation comprises one, several, or all of:
generating control data based on the timeseries data and outputting the control data to affect operation of the at least one apparatus (14; 14, 14', 14"; 150; 160);
generating and outputting storage control data to cause storage of the timeseries data;
controlling a human machine interface, HMI.

12. The method of any one of the preceding claims, wherein the at least one apparatus (14; 14, 14', 14"; 150; 160) comprises one or several of:
a microscope (14);
a medical apparatus (150);
a medical imaging apparatus (150);
an ophthalmic apparatus;
a manufacturing apparatus (160);
an industrial measurement apparatus (160);
a quality control apparatus;
an image acquisition apparatus;
a planetarium apparatus;
a spectroscopic apparatus.

13. Machine-readable instruction code comprising machine-readable instructions which, when executed by at least one processing circuit (30), cause the at least one processing circuit (30) to perform the method of any one of the preceding claims.

14. A processing system (20; 11, 20) for processing a log file (37) of at least one apparatus (14; 14, 14', 14"; 150; 160), the processing system (20; 11, 20) comprises
at least one processing circuit (30) operative to:
obtain the log file (37) of the at least one apparatus (14; 14, 14', 14"; 150; 160), the at least one apparatus (14; 14, 14', 14"; 150; 160) comprising a plurality of apparatus components (14a-14n, 15; 14a-14n, 15, 14a'-14n', 14a"-14n"; 150a-150n, 151, 152, 153, 154; 160a-160n, 162), the plurality of apparatus components (14a-14n, 15; 14a-14n, 15, 14a'-14n', 14a"-14n"; 150a-150n, 151, 152, 153, 154; 160a-160n, 162) comprising a source (14b; 14b, 14b', 14b"; 150a; 160a) of electromagnetic radiation and/or a detector (14a; 14a, 14a', 14a"; 150b; 160b) of electromagnetic radiation;
identify several log messages (71, 75; 111; 112) contained in the log file (37), the at least one processing circuit being operative to identify one or several multi-line log messages (75) distributed over more than one line of the plurality of lines, the several log messages (71, 75; 111; 112) being indicative events recorded by at least one of the plurality of apparatus components (14a-14n, 15; 14a-14n, 15, 14a'-14n', 14a"-14n"; 150a-150n, 151, 152, 153, 154; 160a-160n, 162);
detect timestamps (76) in the several log messages (71, 75; 111; 112) , the at least one processing circuit being operative communicatively interface with a data-driven processing model (12) to obtain timestamp-related information (102, 104) that comprises data specifying a timestamp format; and
extract timeseries data from the several log messages (71, 75; 111; 112) based at least on the timestamp-related information (102, 104);
wherein the processing system (20; 11, 20) is operative to perform at least one operation based on the timeseries data.

15. A system (10), comprising:
at least one apparatus (14; 14, 14', 14"; 150; 160) comprising a plurality of apparatus components (14a-14n, 15; 14a-14n, 15, 14a'-14n', 14a"-14n"; 150a-150n, 151, 152, 153, 154; 160a-160n, 162), the plurality of apparatus components (14a-14n, 15; 14a-14n, 15, 14a'-14n', 14a"-14n"; 150a-150n, 151, 152, 153, 154; 160a-160n, 162) comprising a source of electromagnetic radiation and/or a detector of electromagnetic radiation, the at least one apparatus (14; 14, 14', 14"; 150; 160) being operative to generate a log file (37);
a data-driven processing model (12) operative to provide timestamp-related information (102, 104) that comprises data specifying a timestamp format; and
the processing system (20; 11, 20) of claim 14 operative to communicatively interface with the data-driven processing model (12) to process the log file (37) of the at least one apparatus (14; 14, 14', 14"; 150; 160).
